# EUROPEAN PATENT APPLICATION

(11) **EP 1 479 811 A1**
(43) Date of publication of application: **24.11.2004**
(21) Application number: 04291173.5
(22) Date of filing: 06.05.2004
(51) Int. Cl.: D06F 37/20, F16F 7/09

(54) **Damper for washing machine**

(30) Priority: 20.05.2003 KR 2003031766
(71) Applicant: LG ELECTRONICS INC., Seoul (KR)
(72) Inventor: Kim, Joon Woo, Gwangmyeong-si Gyeonggi-do (KR); Kim, Dong Won, Gwangmyeong-si Gyeonggi-do (KR); Kim, Young Ho, Seoul (KR); Woo, Ki Chul, DA Laboratory LG Electronics Inc., Geumcheon-gu Seoul (KR)
(74) Representative: Pichat, Thierry

(57) **Abstract**

Disclosed is a damper (8) for a washing machine, comprising: a cylinder (161); a rod (162) of which one end is inserted in the cylinder; a sliding rod (166) further extending from the inserted end of the rod; a pad holder (164) slidably installed apart from and on an outer side of the sliding rod; a damping pad (163) formed on an outer circumference of the pad holder (164) and being in contact with an inner circumference of the cylinder (161); and a rotation-preventing part (167,168) interposed between the pad holder (164) and the rod, for preventing a relative rotation between the pad holder (164) and the rod (162).

## Description

### BACKGROUND OF THE INVENTION

### Field of the Invention

The present invention relates to a damper for a washing machine, and more particularly, to a damper that is designed to exert a multiple stages of damping force in response to an amount of vibration generated in the washing machine to properly attenuate the vibration, small and large, thereby stably operating the washing machine under a low noise state. Further, the present invention is directed to a multiple-stage damper that can perform a sufficient role as the damper with respect to the vibration due to conical rotation generated during the operation of the washing machine.

### Description of the Related Art

Generally, washing machines are classified according to washing method into a drum type, an agitator type, and a pulsator type. Particularly, the drum type washing machine has a rotational drum provided at an inner wall with a protruded member, being designed to perform washing using physical impact generated when the laundry ascended by the protruded portion along an inner circumference of the drum drops. In recent years, such a drum type washing machine has been widely used as a household washing machine as it has advantages of reducing the damage of the laundry and saving water.

The pulsator type washing machine includes an upright drum having an opened top and a pulsator installed on an inner bottom of the drum. The pulsator type washing machine is designed to perform washing using rotational force of the pulsator or the drum. The agitator type washing machine includes an upright drum having an opened top and an agitator installed in the drum, thereby performing washing using forced water flow generated by the rotation of the agitator.

The washing machines may be further classified according to various ways. For example, they can be classified according to laundry loading method into a front-loading type where the laundry is loaded through the front, a top-loading type where the laundry is loaded through the top, and a side-loading type where the laundry is loaded through the side.

Regardless of the washing method and the laundry loading method, all of the washing machines have a motor and a movable part rotated by the motor. When the movable part is rotated by the motor, vibration is generated in the washing machine, causing noise and abnormal operation of the washing machine. For example, the vibration may cause a variety of problems such as a walking phenomenon where an installed location of the washing machine is displaced and an RPM reduction problem of the movable part by a frictional force due to collision between the movable part and a stationary part. Therefore, the washing machine manufactures have aspired to develop a method and system that can attenuate the vibration generated when the washing machine is operated. The conventional washing machine has employed a one-stage damper having a fixed damping constant to attenuate the vibration. That is, regardless of the operation state of the washing machine, a fixed damping constant is applied to the movable part. However, since the vibration generated in the movable part is varied at every stroke of the washing machine, it is not preferable that the fixed damping constant is applied to the movable part.

In detail, the operation of the washing machine is done going through a small vibration section and a large vibration section. For example, in a variable RPM section such as an initial stage of a dewatering cycle where the RPM of the movable part is varied, a relatively large vibration is generated. In a steady RPM section where the RPM of the movable part is not varied, a relatively small vibration is generated.

To solve the above problem, a two-stage damper that can attenuate the vibration in response to a physical amount of vibration has been proposed. However, since such a two-stage damper performs the damping operation according to an amount of one-dimensional vibration, there is a problem that the vibration cannot be properly attenuated.

Also, while the amount of vibration is linearly varied, the damping constant of the damper is not linearly varied. That is, since the damping constant of the damper is varied by a predetermined step, the vibration variably generated in the movable part cannot be quickly attenuated.

In addition, since the conventional damper is designed to exert the damping force thereof only in a longitudinal direction thereof but not to exert the damping force with respect to the conical rotation, it has a weak damping force. Especially, in case where the damping on the conical rotation is not performed, the walking phenomenon occurs apparently while the washing machine body rocks from side to side. Of course, this rock of the washing machine causes a large noise.

### SUMMARY OF THE INVENTION

Accordingly, the present invention is directed to a damper for a washing machine that substantially obviates one or more problems due to limitations and disadvantages of the related art.

An object of the present invention is to provide a damper for a washing machine that can attenuate the vibration regardless of other vibration amount generated in the washing machine.

Another object of the present invention is to provide a damper for a washing machine that can attenuate other vibration not one dimensional motion generated in the washing machine.

A further object of the present invention is to provide a damper for a washing machine in which the vibration is properly attenuated to thereby increase the user's delightfulness and allow the stable operation of the washing.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a damper for a washing machine, comprising: a cylinder; a rod of which one end is inserted in the cylinder; a sliding rod further extending from the inserted end of the rod; a pad holder slidably installed apart from and on an outer side of the sliding rod; a damping pad formed on an outer circumference of the pad holder and being in contact with an inner circumference of the cylinder; and a rotation-preventing part for preventing a relative rotation between the pad holder and the rod.

In an aspect of the present invention, there is provided a damper for a washing machine, comprising: a cylinder fixed to a case of the washing machine and one side of a tub; a rod fixed to the case and the other side of the tub and folded with the cylinder; a sliding rod further extending from the rod; a pad holder spaced away from the sliding rod; a damping pad interposed into a contact surface between the pad holder and the cylinder; and a rotation-preventing part for preventing a relative rotation between the pad holder and the rod.

In another aspect of the present invention, there is provided a damper for a washing machine, comprising: a cylinder; a rod of which one end is inserted in the cylinder; a pad holder slidably installed apart from and on an outer side of the rod; a damping pad formed on an outer circumference of the pad holder and being in contact with an inner circumference of the cylinder; and a rotation-preventing part formed on a contact position between the rod and the pad holder, for preventing a relative rotation between the pad holder and the rod.

In a further aspect of the present invention, there is provided a damper for a washing machine, comprising: a cylinder; a rod of which one end is inserted in the cylinder; a sliding rod extending from the rod; a pad holder slidably installed apart from and on an outer side of the rod; a damping pad formed on an outer circumference of the pad holder and being in contact with an inner circumference of the cylinder; and a rotation-preventing part of which one end is fixed to both sides of the pad holder and the other end is fixed to the rod and the sliding rod, for preventing a relative rotation between the pad holder and the rod.

In still another aspect of the present invention, there is provided a damper for a washing machine, comprising: a cylinder; a rod inserted in the cylinder; a damping pad formed on an outer circumference of the rod; and a rotation-preventing part for preventing a relative rotation between the pad holder and the rod.

According to the present invention, it is possible to attenuate various vibrations generated in the washing machine. In other words, since both the translational displacement and the conical vibration can be attenuated, low vibration and low noise of the washing machine can be realized with more reliability.

Moreover, since the vibration generated in the washing machine can be attenuated positively, it is possible to enhance the safety in operating the washing machine.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a perspective view of a drum type washing machine where a damper according to a first embodiment of the present invention is employed;

Fig. 2 is a sectional view of the damper depicted in Fig. 1;

Fig. 3 is a sectional view taken along the line A-A' of Fig. 2;

Fig. 4 is a sectional view of a damper according to a first embodiment, illustrating a damping operation for attenuating transient vibration of a drum when a washing machine is in an initial dewatering operation;

Fig. 5 is a sectional view of a damper according to a first embodiment, illustrating a damping operation for attenuating relatively small vibration of a drum when a washing machine is in a steady dewatering operation;

Fig. 6 is a sectional view of a damper according to a first embodiment, illustrating a damper operation where conical vibration is attenuated by the damper;

Fig. 7 is a sectional view of a damper according to a second embodiment of the present invention; and

Fig. 8 is a sectional view of a damper according to a second embodiment, illustrating a damping operation where conical vibration is attenuated by the damper.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In the embodiments of the present invention, a drum type washing machine is exemplified. However, the present invention is not limited to the drum type washing machine. The present invention can be applied to a variety of devices generating vibration as well as other types of the washing machine.

### First Embodiment

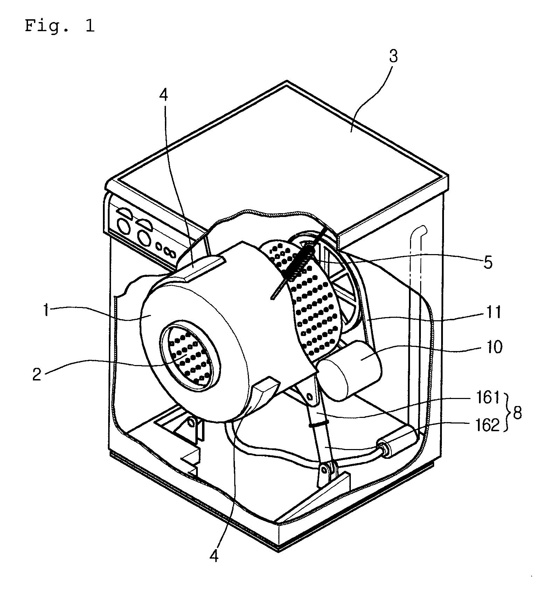

Fig. 1 shows a perspective view of a drum type washing machine where a damper according to a first embodiment of the present invention is employed.

As shown in the drawing, a drum type washing machine includes a case 3, a tub 1 disposed in the case 3 to storing water, a drum 2 disposed in the tub 1 to receive the laundry, and a driving motor 10 disposed on a rear side of the tub 1 to rotate the drum 2.

The operation of the drum type washing machine will be described hereinafter.

Rotational force of the driving motor 10 is transmitted to the drum 2 via a belt 11. When the drum 2 rotates, the laundry loaded in the drum 2 rotates together with the drum 2. At this point, since the drum 2 rotates with a relatively low RPM, the laundry ascends by the rotation of the drum and drops by a gravity to collide with the water contained in the tub 1. By colliding force between the laundry and the water, dirts and contaminants stuck on the laundry are removed. Although the driving force of the driving motor 10 is transmitted to the drum via the belt 11 in this embodiment, it will be apparent that the driving motor 10 may be designed to be directly coupled to the drum 2 and thereby as the driving motor 10 rotates, the drum 2 rotates. Also, it will be apparent that as the driving motor rotates, the drum 2 rotates and thereby vibration is generated. Especially, even where laundry is eccentrically received in the drum 2, the vibration is generated in a conical direction as well as in one-dimensional direction. The present invention is interested in attenuating the vibration generated in the conical direction.

In addition, the washing machine further includes a weight 4 disposed on an outer circumference of the tub 1 to correct the center of gravity of the tube 1 in all directions, a spring 5 having opposite ends respectively connected to the case 3 and the tub 1 to alleviate vibration generated from both the tub 1 and the drum 2, and a damper 8 having opposite ends respectively connected to the case 3 and the tub 1 to attenuate vibration generated in the tub 1.

The weight 4 is designed to correct the center of gravity of the tub 1 to radically alleviate the vibration that may be generated by the eccentric center of gravity of the tub 1.

The vibration generated by the operation of the tub 1 is first absorbed by the spring 5 and is then attenuated by the damper 8. As a result, the vibration generated by the operation of the tube 1 can be quickly removed.

In detail, the damper includes a cylinder 161 of which one end is fixed to the tub 1, and a rod 162 of which one end is fixed to the case 3 and inserted into the cylinder 161. Of course, the damper 8 may be constructed such that the rod 162 is connected to the tub 1 and the cylinder is connected to the case 3. Although the cylinder 161 and the rod 162 are connected as above, such a change does not fail to embody the present invention.

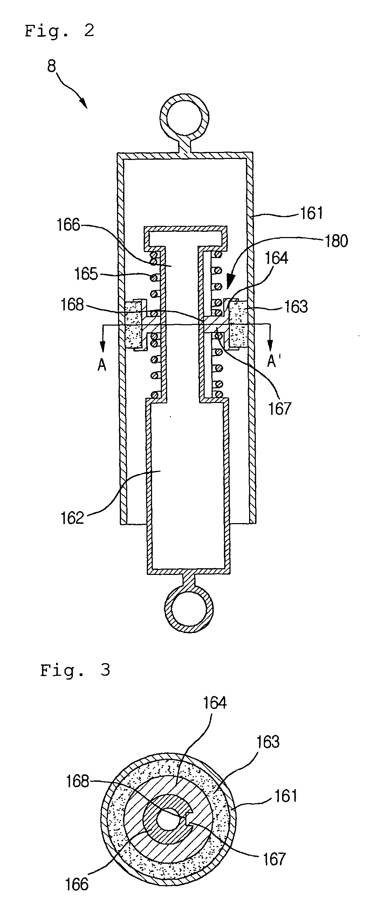

Describing operation of the damper 8, a damping pad is inserted between the rod 162 and the cylinder 161 inserted into the rod 162, and is in contact with an inner circumference of the cylinder 161. When vibration generated from the tub 1 is transferred to the cylinder 161 so that the cylinder 161 and the rod 162 are displaced different with each other in the length direction, damping is performed by a frictional force between the inner circumference of the cylinder 161 and the damping pad (see numeral 170 of Fig. 2). In particular, the damper 8 can perform the damping operation even with respect to the conical rotation as well as with respect to the translational displacement.

Shape and structure of the damper according to preferred embodiments will be described hereinafter.

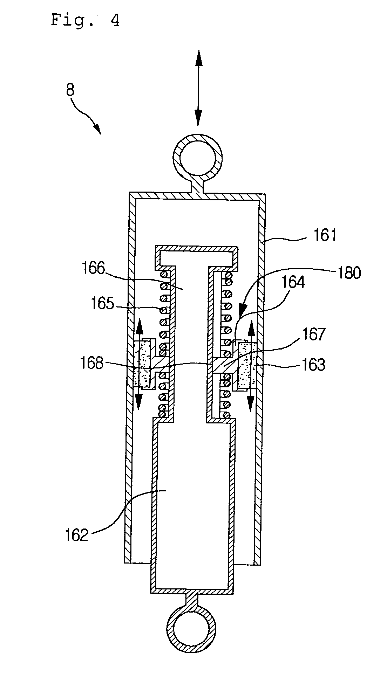

Fig. 2 shows a sectional view of the damper according to a first embodiment of the present invention, and Fig. 3 shows a sectional view taken along the line A-A' of Fig. 2.

Referring to Figs. 2 and 3, the damper 8 includes a hollow cylinder 161, a rod 162 of which one end is inserted in the cylinder 161, a sliding rod 166 integrally formed on an end of the rod 162, a pad holder 164 slidably installed apart from and on an outer circumference of the sliding rod 166, a damping pad 163 formed on an outer circumference of the pad holder and allowing a damping force to act on through a frictional action with the inner circumference of the cylinder 161, and a rotation-preventing part 180 for restraining a relative rotation between the pad holder and the rod.

The damper 8 further includes a spring 165 disposed on both sides of the pad holder 164, for supporting the pad holder 164 and the sliding rod 166.

The rotation-preventing part 180 is provided with a protrusion 167 formed protruding inwardly from the inner circumference of the pad holder in the length direction, and a groove 168 formed on an outer circumference of the sliding rod 166 so as to correspond to the protrusion 167. The groove 168 is shaped in a key groove, and may be formed one or more. In order to further increase the rotational restraint force of the sliding rod 166 within the pad holder 164, the groove 168 can be formed in the form of a plurality of splines. The protrusion 167 is formed in the shape of a key and can be alternatively formed one or more on the inner circumference of the pad holder 164 such that the protrusion 167 is correspondingly inserted into the groove 168. Also, the protrusion 167 may be formed in the form of a plurality of splines such that the protrusion 167 is correspondingly inserted into the groove 168 formed in the structure of the splines on the outer circumference of the sliding rod 166. Although serration is formed unlike the spline, the same operation can be obtained.

Alternatively, the rotation-preventing part 180 is configured to include a protrusion formed protruding from the outer circumference of the sliding rod 166 in the length direction, and a groove formed on the inner circumference of the pad holder 164 in the length direction with shape and structure corresponding to the protrusion.

Operation of the damper according to the present embodiment will be described in brief.

The damper 8 can attenuate a transient vibration of the drum 2 in an initial dewatering operation and a small vibration of the drum 2 in a steady operation by using a translational displacement acting on the damper 8 in the axial direction thereof. Also, the conical vibration generated when the drum 2 rotates conically can be attenuated by a damping force through the torsion action of the damper 8. The rotation-preventing part 180 is formed such that the damper 8 performs the torsion action.

The operation and interaction of the above-described damper will be described in detail hereinafter.

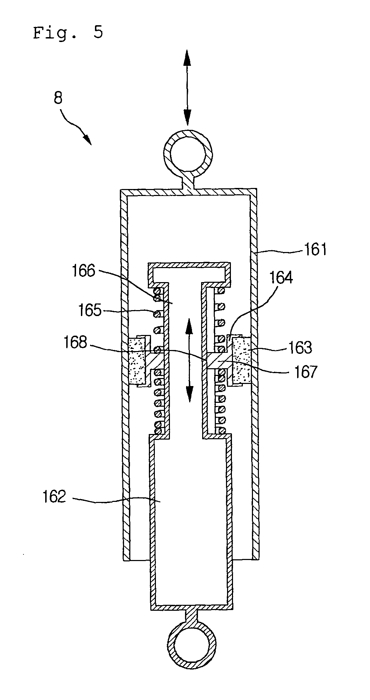

Fig. 4 illustrates a damping operation for attenuating transient vibration of the drum when the washing machine is in the initial dewatering operation, while Fig. 5 illustrates a damping operation for attenuating relatively small vibration of a drum when a washing machine is in a steady dewatering operation.

Referring first to Fig. 4, in an initial dewatering operation where a transient vibration is generated from the drum 2, the transient vibration of the drum 2 is attenuated by a procedure that the pad holder 164 is compressed by the rod 162 through the spring 165. At this time, a damping force can act between an outer circumference of the sliding rod 166 and an inner circumference of the pad holder 164. So as the damping force to exceed a predetermined value, a predetermined damping member (not shown) can be inserted between the sliding rod 166 and the pad holder 164.

Meanwhile, if the spring 165 is completely compressed by a compressive force of the rod 162, the pad holder 164 is not slid with respect to the sliding rod 166 but is fixed in its location. From this instant, the pad holder 164 and the damping pad 163 move linearly along with the rod 162 as shown in the drawing. As a result, the frictional action between the inner circumference of the cylinder 161 and the outer circumference of the damping pad 163 allows the transient vibration acting in the axial direction of the damper 8, i.e., the length direction of the damper 8 to be sufficiently attenuated. The arrow shown in Fig. 4 illustrates that the pad holder is linearly movable with respect to the cylinder 161.

Referring to Fig. 5, in a steady dewatering operation where the rotation of the drum 2 becomes stable and the vibration is decreased, the vibration of the drum 2 is attenuated by a procedure that the pad holder 164 is compressed by the rod 162 through the spring 165. In detail, a damping force can act between an outer circumference of the sliding rod 166 and an inner circumference of the pad holder 164. So as the damping force to exceed a predetermined value, a predetermined damping member (not shown) can be inserted between the sliding rod 166 and the pad holder 164. Also, since a displacement due to the compressive force of the rod 162 or the vibration of the drum 2 does not reach to such a degree that an end of the rod 162 contacts the pad holder 164, the pad holder 164 and the damping pad 163 do not move with respect to the cylinder 161.

Finally, it is possible to more effectively attenuate the small vibration by a relatively weak damping force.

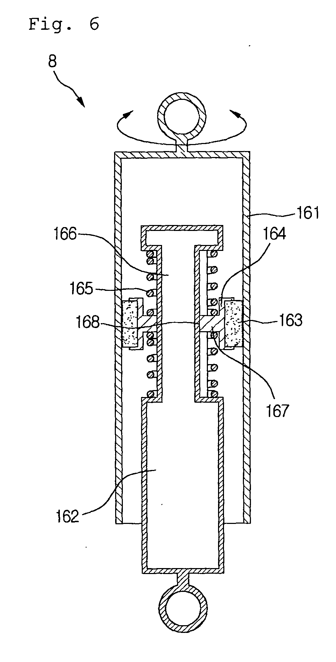

Fig. 6 is a sectional view of a damper according to a first embodiment, illustrating a damper operation where conical vibration is attenuated by the damper.

Referring to Fig. 6, in case laundry is eccentrically received in the drum 2, the drum 2 is rotated conically (i.e., rotates in a cone shape while rocking in all directions). At this time, the conical vibration is generated even from the tub 1, so that the conical vibration acts even on the damper 8. By this conical vibration, torsion is applied to the damper 8, so that the cylinder 161 and the rod 162 rotate relative to each other. In this embodiment, the rotation-preventing part 180 for preventing a relative rotation between the cylinder 161 and the rod 162 is implemented.

In detail, the protrusion 167 of the pad holder 164 is inserted into the groove 168 of the sliding rod 166, and the pad holder 164 is rotatable only integrally with the sliding rod 166. Hence, if the rod rotates 162, the pad holder 164 and the damping pad 163 rotate too. Finally, a frictional force is generated between the damping pad 163 and the inner circumference of the cylinder 161, so that the conical vibration can be attenuated.

### Second Embodiment

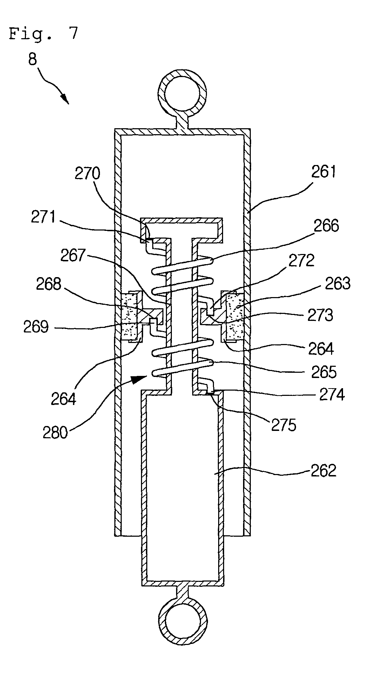

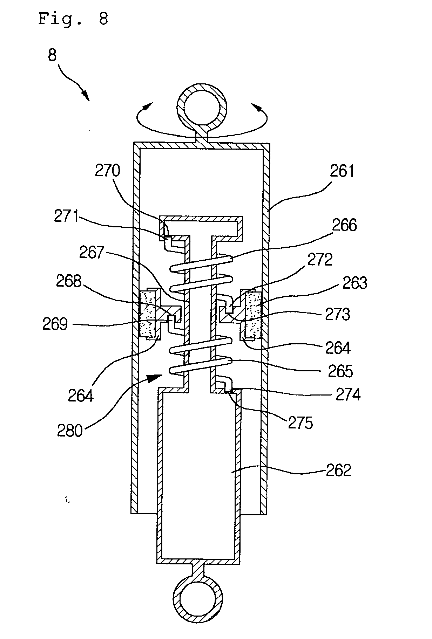

Figs. 7 and 8 illustrate a second embodiment of the present invention. Specifically, Fig. 7 is a sectional view of a damper according to a second embodiment of the present invention and Fig. 8 is a sectional view illustrating a damping operation.

Referring to Fig. 7, a damper 8 of this embodiment is configured to include a hollow cylinder 261, a rod 262 of which one end is inserted in the cylinder 261, a sliding rod 267 integrally formed on an end of the rod 262, a pad holder 264 slidably installed apart from and on an outer side of the sliding rod 267, a damping pad 263 formed on an outer circumference of the pad holder 264 and allowing a friction force to act on through the friction with the inner circumference of the cylinder 261, and first and second springs 265 and 266 respectively coupled between the pad holder 264 and the rod 262 and between the pad holder 263 and the sliding rod 267. The first and second springs 265 and 266 allow a relative rotation between the pad holder 264 and the sliding rod 267 to be constrained, and thereby function as a rotation-preventing part 280.

In detail, each of the first and second springs 265 and 266 has spring coupling protrusions 269, 274, 271 and 272 formed at their respective both ends such that they are coupled between the pad holder 264 and the rod 262 and between the pad holder 264 and the sliding rod 267. Also, spring coupling grooves 275, 268, 273 and 270 are respectively formed at predetermined positions of the pad holder 264 and the rod 262, and at predetermined positions of the pad holder 264 and the sliding rod 267 so that the spring coupling protrusions 269, 274, 271 and 272 can be inserted into and fixed to the spring coupling grooves 275, 268, 273 and 270.

Meanwhile, the one side coupling protrusion 269 of the first spring 265 and the other side coupling protrusion 272 are arranged at a cross angle and are inserted into and fixed to the pad holder 264. The spring coupling grooves 268 and 273 are also formed at a cross angle on one and the other sides of the pad holder 264. By the above construction, although bi-directional translational movement, i.e., conical vibration, is applied to the pad holder 264, the damper can operate safely.

Referring to Fig. 8, since the vibration applied in the length direction of the damper 8, in other words, the attenuation of the vibration due to the translational movement is identical to that described in the first embodiment, its detailed description will be omitted. Next, attenuation action of the conical vibration will be described.

The pad holder 264 is in a state constrained to the rod 262 by the first and second springs coupled in a diagonal direction between the pad holder 264 and the rod 262 and between the pad holder 264 and the sliding rod 267. Hence, the rotational force of the rod 262 is transferred to the pad holder 264. As a result, the rotational force of the rod 262 is transferred to the damping pad 263 through the pad holder 264 so that the conical vibration of the tub 1 can be attenuated through a frictional action between the inner circumference of the cylinder 261 and the damping pad 263.

As described previously, by allowing the damping force to act on in an initial dewatering operation and a steady dewatering operation, it is possible to attenuate the translational displacement (vibration in the axial direction) acting on in the axial direction. In addition, the conical vibration exerted by the conical rotation of the drum 2 can be attenuated by a torsion action of the damper 8.

In conclusion, since both the translational displacement and the conical vibration can be attenuated, low vibration and low noise of the washing machine can be realized.

Moreover, since a proper damping force can be applied according to a concrete status of the vibration amount of the movable part, the vibration generated in the washing machine can be attenuated positively.

It will be apparent to those skilled in the art that various modifications and variations can be made in the present invention. Thus, it is intended that the present invention covers the modifications and variations of this invention provided they come within the scope of the appended claims and their equivalents.

## Claims

1. A damper for a washing machine, comprising:
a cylinder;
a rod of which one end is inserted in the cylinder;
a sliding rod further extending from the inserted end of the rod;
a pad holder slidably installed apart from and on an outer side of the sliding rod;
a damping pad formed on an outer circumference of the pad holder and being in contact with an inner circumference of the cylinder; and
a rotation-preventing part for preventing a relative rotation between the pad holder and the rod.

2. The damper according to claim 1, further comprising first and second springs respectively disposed on both sides of the pad holder.

3. The damper according to claim 1, wherein the rotation-preventing part comprises:
a groove formed on any one of the pad holder and the sliding rod; and
a protrusion formed on a corresponding position to the groove at the other one of the pad holder and the sliding rod.

4. The damper according to claim 1, wherein the sliding rod has a diameter smaller than that of the rod.

5. The damper according to claim 1, further comprising a damping member interposed into a contact surface between the sliding rod and the pad holder.

6. The damper according to claim 1, wherein the rotation-preventing part comprises a key and a key groove which are interposed between the rod and the pad holder.

7. The damper according to claim 1, wherein the rotation-preventing part is a serration interposed between the rod and the pad holder.

8. The damper of claim 1, wherein the rotation-preventing part is a spline interposed between the rod and the pad holder.

9. The damper according to claim 1, wherein the rotation-preventing part is a spring respectively fixed to both sides of the pad holder.

10. The damper of claim 1, wherein the rotation-preventing part is a spring fixed to an end of the sliding rod, an end of the pad holder, an end of the rod, and an end of the pad holder.

11. The damper of claim 1, wherein the rotation-preventing part is a pair of springs, which are fixed to both sides of the pad holder and extended to.

12. The damper of claim 1, wherein the rotation-preventing part is a pair of springs, which are fixed to both the other sides of the pad holder and extended to.

13. The damper of claim 1, wherein the rotation-preventing part is a pair of springs of which one ends are inserted into the pad holder and extended to.

14. The damper of claim 1, wherein the rotation-preventing part is a pair of springs of which one ends are fixed to the pad holder and extended to.

15. A damper for a washing machine, comprising:
a cylinder fixed to a case of the washing machine and one side of a tub;
a rod fixed to the case and the other side of the tub and folded with the cylinder;
a sliding rod further extending from the rod;
a pad holder spaced away from the sliding rod;
a damping pad interposed into a contact surface between the pad holder and the cylinder; and
a rotation-preventing part for preventing a relative rotation between the pad holder and the rod.

16. The damper according to claim 15, wherein the rotation-preventing part comprises a groove and a protrusion, which are formed in a contact position between the pad holder and the rod.

17. The damper according to claim 15, wherein the rotation-preventing part is a pair of springs of which one ends are fixed to the pad holder and the other ends are fixed to the sliding rod and the rod.

18. The damper of claim 15, further comprising springs interposed into both sides of the pad holder.

19. A damper for a washing machine, comprising:
a cylinder;
a rod of which one end is inserted in the cylinder;
a pad holder slidably installed apart from and on an outer side of the rod;
a damping pad formed on an outer circumference of the pad holder and being in contact with an inner circumference of the cylinder; and
a rotation-preventing part formed on a contact position between the rod and the pad holder, for preventing a relative rotation between the pad holder and the rod.

20. A damper for a washing machine, comprising:
a cylinder;
a rod of which one end is inserted in the cylinder;
a sliding rod extending from the rod;
a pad holder slidably installed apart from and on an outer side of the rod;
a damping pad formed on an outer circumference of the pad holder and being in contact with an inner circumference of the cylinder; and
a rotation-preventing part of which one end is fixed to both sides of the pad holder and the other end is fixed to the rod and the sliding rod, for preventing a relative rotation between the pad holder and the rod.

21. A damper for a washing machine, comprising:
a cylinder;
a rod inserted in the cylinder;
a damping pad formed on an outer circumference of the rod; and
a rotation-preventing part for preventing a relative rotation between the pad holder and the rod.
